# EUROPÄISCHE PATENTSCHRIFT

(11) **EP 1 524 093 B1**
(45) Veröffentlichungstag und Bekanntmachung des Hinweises auf die Patenterteilung: **25.10.2006**
(21) Anmeldenummer: 04022497.4
(22) Anmeldetag: 22.09.2004
(51) Int. Cl.: B29C 47/90

(54) **Schnellrüstsystem für Kalibriervorrichtungen**
Quick change system for calibration devices
Système de changement rapide pour les dispositifs de calibrage

(30) Priorität: 16.10.2003 DE 10348242
(43) Veröffentlichungstag der Anmeldung: 20.04.2005
(73) Patentinhaber: THYSSEN POLYMER GMBH, 94327 Bogen (DE)
(72) Erfinder: Hofmann, Jörg, 94347 Ascha (DE); Macht, Gerhard, 94379 St.Englmar (DE); Landes, Peter, 94344 Wiesenfelden (DE)

(56) Entgegenhaltungen:
- US-A- 5 340 295
- US-A- 5 514 325
- US-A- 5 630 982

## Beschreibung

Die Erfindung betrifft ein Schnellrüstsystem für Kalibriervorrichtungen mit einem auf einem Kalibriertisch montierten Trockenkaliber und nachfolgendem Vakuumtank(s) zur Kalibrierung bzw. Kühlung des Extrudats.

Rüstsysteme für Extrusionsanlagen sind an sich bekannt. Bei diesen Systemen wird auf einem sogen. Kalibriertisch sowohl das Trockenkaliber für das extrudierte Profil, als auch der der Kühlung und damit der Verfestigung desselben dienende Vakuumtank fest mit dem Kalibriertisch verbunden. Die Folge davon ist, dass bei jedem Werkzeugwechsel, notwendig für jedes neu extrudierte Profil, eine andere Trockenkalibriereinheit mit anderen Längen montiert werden muss, ebenso wie eine dadurch bedingte Neuausrichtung (Versetzen) der Vakuumtanks und deren Ver- und Entsorgung, die mittels Kran in eine neue Position montiert und, wie die Kalibriereinheit auch, bei jeder Änderung extra neu justiert werden muss. So sind Kalibriervorrichtungen beispielsweise aus der US -A-5 340 295 und US-A-5 630 982 hervor. Die US-A-5 340 295 zeigt eine Vakuum-Kalibriervorrichtung für Profile mit einem steuerbaren Vakuum, wobei das Vakuum präzise mittels einer motorgetriebenen Vakuumpumpe und eines über einen Schrittmotor gesteuerten Ventils kontrolliert wird. Die US-A-5 630 982 betrifft ein Verfahren und eine Vorrichtung zum Extrudieren von Kunststoffrohren mit reduzierter Exzentrität bei dem/der die Extrusion in einen Vakuumtank erfolgt, der eine Kühlflüssigkeit und einen Kalibrator enthält. Außerdem ist eine Ultraschalleinrichtung für die Messung der Wanddicke vorgesehen.

Es liegt auf der Hand, dass dieses Procedere nicht nur sehr aufwendig ist, sondern auch viel Zeit in Anspruch nimmt.

Der Erfindung, wie sie im Anspruch 1 beschrieben ist, liegt daher die Aufgabe zugrunde, ein solches Rüstsystem so zu verbessern, dass die Rüstzeiten beim Wechseln der Extrusionswerkzeuge und Kalibriervorrichtungen deutlich verkürzt werden und die damit zusammenhängende Kühlwasser Ver- und Entsorgung den Gegebenheiten angepasst wird.

Eine weitere Augestaltung der Erfindung weist insbesondere den Vorteil auf, dass einerseits für das Rüsten kein Kran mehr erforderlich ist und die Rüstzeit in jedem Fall um mindestens 50% reduziert werden kann; außerdem müssen die Kalibriervorrichtung und der/die Vakuumtank(s) nicht mehr ausgerichtet werden. Ein weiterer Vorteil ist eine erhebliche Qualitätsverbesserung der extrudierten Profile.

Die Erfindung ist nachstehend anhand eines in den Abbildungen dargestellten Ausführungsbeispieles näher erläutert.

Es zeigt:
- Fig. 1: eine schematische Darstellung der Höhenverstellung des Vakuum tanks,
- Fig. 2: die Seitenansicht der Fig. 1 mit vertikaler und horizontaler Verstellung,
- Fig. 3: eine schematische Darstellung der Höhenverstellung der Kalibriervorrichtung,
- Fig. 4: die Seitenansicht der Fig. 3,
- Fig. 5: die Justierung Kalibriervorrichtung - Vakuumtank und
- Fig. 6: eine schematische Ansicht der Wasserentsorgung

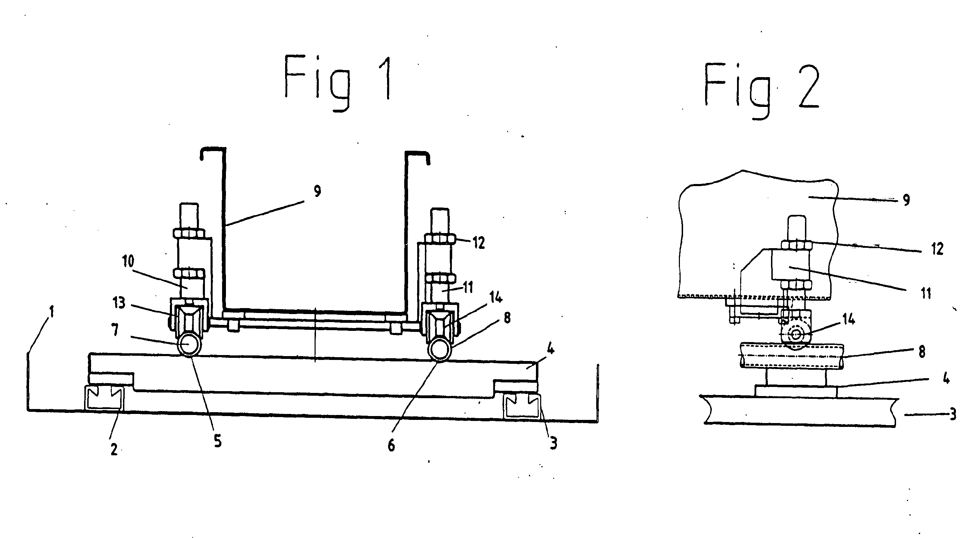

Wie in Figur 1 dargestellt, befinden sich auf dem Kalibriertisch 1 rechts und links in Extrusionsrichtung je eine Halfenschiene 2 und 3 auf denen sich ein oder mehrere in Extrusionsrichtung vorgesehene Querträger 4 abstützen. Die Querträger 4 besitzen in ihrer dem Kalibriertisch 1 abgewandten Seite zwei Nuten 5 und 6 für die Laufführung der Profile 7 und 8, beispielsweise Rohre. Der Vakuumtank 9 ist beidseitig in Extrusionsrichtung mittels eines in vertikaler Richtung justierbaren Tragarmes 10,11 verbunden, wobei der Tragarm mit einem Verstellmechanismus 12, beispielsweise einem Gewinde, elektromagnetischem Steller oder dergl. für die Justage ausgerüstet ist. Die beiden Tragarme 10 und 11 sind mit Gleitvorrichtungen 13,14 beispielsweise Rollen oder dergl. verbunden und horizontal auf den Profilen 7 und 8 verschiebbar. Somit kann der Vakuumtank 9 mühelos in vertikaler und horizontaler Richtung verstellt und justiert werden.

### Die Figur 2 zeigt eine Seitenansicht der Figur 1

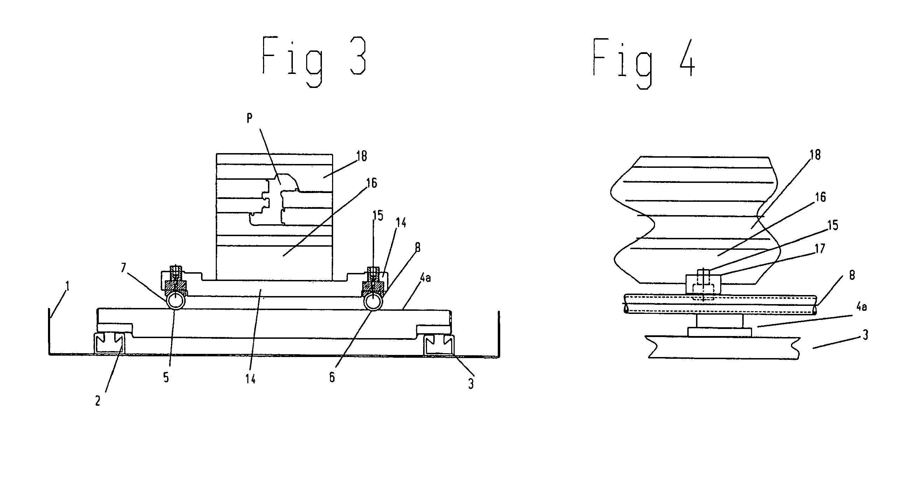

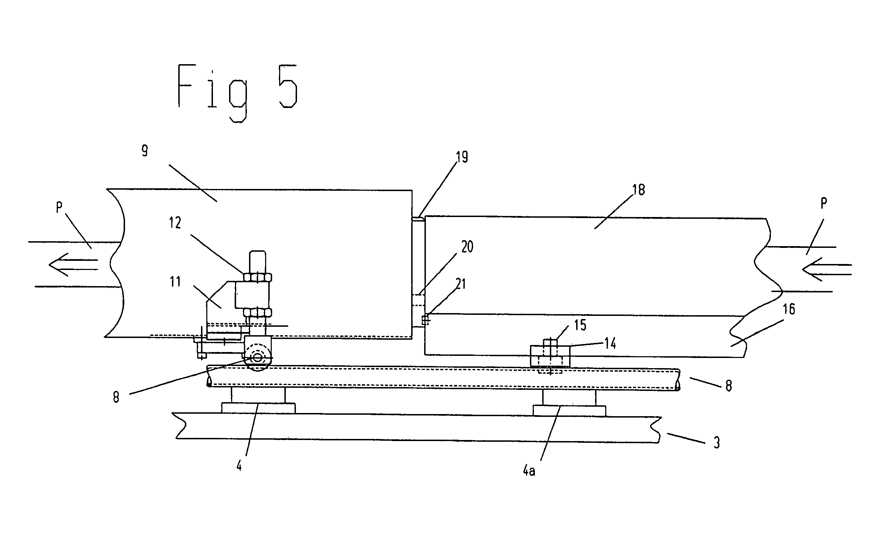

Aus den Abbildungen 3 und 4 geht die Höhenverstellung für den Kalibriervorrichtung 18 hervor, wobei die Figur 1 in der Extrusionsrichtung gesehen und vor dem Vakuumtank 9 angeordnet und mit diesem fest, aber justierbar verbunden ist, wie aus Figur 5 hervorgeht. Beide Einrichtungen, Kalibriervorrichtung 16 und Vakuumtank 9 sind auf den parallel verlaufenden Profilen 7 und 8 sowohl einzeln als auch gemeinsam mittels der Gleitvorrictung 13,14 verschiebbar. Der Kalibriervorrichtung 18 wird von einer Systemplatte 16 getragen und ist mittels eines an deren Fuß 17 vorgesehenen Verstellmechanismus 15 vertikal justierbar und zwar getrennt vom Vakuumtank 9. Das zu kalibrierende Profil, beispielsweise ein Kunststoffrahmenprofil, ist mit P bezeichnet.

Die Figur 5 zeigt schematisch die gegenseitige vertikale Verstellung Vakuumtank 9 - Kalibriervorrichtung 18. Dazu dient eine Adapterplatte 19, die zwischen Kalibriervorrichtung 18 und Vakuumtank 9 geschaltet ist und eine feinjustierbare Zentrierung 21: Vakuumtank 9 - Adapterplatte 18 sowie weiters eine solche Zentrierung 20: Adapterplatte 19 - Kalibriervorrichtung 18.

Der Kalibriervorrichtung 18 ist fest über den Querträgern 4 auf den Profilen 7,8 montiert. Durch die Einstellmöglichkeit der Gleitvorrichtungen 13,14 über den Verstellmechanismus 12 ist es möglich die gesamte Extrusionslinie vorab exakt zu justieren, um ein nachträgliches Ausrichten des/der Vakuumtank(s) 9 zu vermeiden. Wird ein anderes Profil P extrudiert und kalibriert, werden für die dazu erforderliche Kalibriervorrichtung 18 mit anderen Abmessungen lediglich der/die Vakuumtank(s) 9 auf den Profilen 7,8 verschoben und über die Adapterplatte 19 mit der Kalibriervorrichtung 18 verbunden. Die Kalibriervorrichtung 18 selbst ist durch die Justagemöglichkeit auf den Profilen 7,8 stets gegenüber dem Vakuumtank exakt ausgerichtet.

Aus Fig. 6 ist ersichtlich, dass am ersten Vakuumtank 9 eine zentrale Wasserentsorgungsstation 22 vorgesehen ist. Somit können sämtliche Wasserentsorgungsleitungen 23 weiterer, aber nicht dargestellter, Vakuumtanks mit dieser zentralen Wasserentsorgungsstation 22 verbunden werden, der beispielsweise über einen flexiblen Schlauch 24 mit einem zentralen Sammelbehälter 25 verbunden ist. Somit ist ein Austausch der Entsorgungsschläuche der Vakuumtanks 9 beim Verschieben derselben nicht mehr erforderlich. Das hat weiter zur Folge, dass dadurch die Gesamtschlauchlängen der Extrusionslinie kürzer werden, was zu einem ruhigeren Absaugen des Kühlwasser-Luftgemisches aus dem/den Vakuumtank(s) 9 führt.

Der Verfahrensablauf bei einem extrudierten Kunststoffprofil P, beispielsweise einem Fenster- rahmen- oder -flügelprofil, ist wie folgt: Das noch thermoelastische zu kalibrierende Profil P tritt rechts in der Zeichnung in den Kalibriervorrichtung 18 ein, durchläuft diesen, weiter den/die Vakuumtank(s) 9 und verlässt diesen, links in der Zeichnung als verfestigtes Profil. Extruder, Abzug usw. sind in den Abbildungen nicht dargestellt. Ist ein anderes Profil P in einem anderen Kalibriervorrichtung 18 zu kalibrieren genügt für den Austausch ein unproblematisches horizontales Verschieben des/der Vakuumtanks 9, Einsetzen der neuen Kalibriervorrichtung und Justage der einzelnen Komponenten. Ein aufwendiges Hantieren mit einem Kran zum Umbau der Extrusionslinie ist damit vermieden, die Rüstzeit derselben auf 50% und weniger reduziert und außerdem die Qualität des extrudierten Profiles P verbessert.

### Bezugszeichenliste

1. Kalibriertisch
2. Halfenschiene
3. Halfenschiene
4. Querträger
5. Nut
6. Nut
7. Profil
8. Profil
9. Vakuumtank
10. Tragarm
11. Tragarm
12. Verstellmechanismus
13. Gleitvorrichtung
14. Gleitvorrichtung
15. Verstellschraube
16. Systemplatte
17. Fuß Systemplatte
18. Kalibriervorrichtung
19. Adapterplatte
20. Zentrierung
21. Zentrierung
22. Wasserentsorgungsstation
23. Wasserentsorgungsleitungen
24. Flexibler Schlauch
25. Sammelbehälter
***P. extrudiertes Profil***

## Patentansprüche

1. Schnellrüstsystem für Kalibriervorrichtungen mit einem auf einem Kalibriertisch montierten Trockenkaliber und nachfolgendem Vakuumtank(s) zur Kalibrierung bzw. Kühlung des Extrudats, **dadurch gekennzeichnet, dass** auf einem Querträger (4) zwei horizontal und parallel verlaufende Profile (7,8) befestigt und die Kalibriervorrichtung (18) und die Vakuumtanks (9) auf diesen Profilen (7,8) gleitend gelagert fest sind und unter dem bzw. den Vakuumtank (s) (9) Tragarme (10, 11) vorgesehen sind, an deren Enden sich höhenverstellbare auf den beiden Profilen bewegliche Gleitvorrichtungen (13, 14) befinden, wobei die Kalibriervorrichtung (18) fest über die Tragarme (10, 11) auf den beiden Profilen (7, 8) montiert ist.

2. Schnellrüstsystem nach Anspruch 1, **dadurch gekennzeichnet, dass** eine zentrale Wasserentsorgungsstation (22) an einem Vakuumtank befestigt ist, die mittels eines flexiblen Schlauches (24) mit der Wasser-Lufttrennung der Wasserentsorgungsvorrichtung (25) flexibel verbunden ist und sämtliche Vakuumtanks (9) mit der Wasserentsorgungsstation (22) fest verbunden sind.

## Claims

1. Quick set-up system for calibrating devices with a dry calibre mounted on a calibrating table and successional vacuum tank(s) for calibrating or cooling the extrudate, **characterised in that** two horizontal profiles running parallel to one another (7, 8) are secured to a crossbeam (4) and the calibrating device (18) and the vacuum tanks (9) are firmly mounted on these profiles, along which they can glide, and that brackets (10, 11) are provided under the vacuum tank(s) (9) at the ends of which are height-adjustable gliding devices (13, 14) that move along both profiles, whereupon the calibrating device (18) is firmly mounted above the brackets (10, 11) on the two profiles (7, 8).

2. Quick set-up system in accordance with claim 1, **characterised in that** a central water disposal station (22) is secured to a vacuum tank, and the water disposal station is flexibly connected to the water-air separation of the water disposal device (25) by means of a flexible hose (24) and all vacuum tanks (9) are firmly connected to the water disposal station (22).

## Revendications

1. Système d'équipement rapide pour calibrateurs avec un calibre de séchage monté sur une table de calibrage et un/des réservoir/s sous vide placés en aval pour le calibrage voire la réfrigération du produit d'extrusion **caractérisé en ce que** deux profils (7, 8) s'étendant horizontalement et parallélement sont fixés sur un support transversal (4) et que le calibrateur (18) et les réservoirs sous vide (9) sont logés de façon fixe sur ces profils (7, 8) de façon glissante et que des bras de support (10, 11) sont pourvus sous le ou les réservoir/s sous vide (9) aux extrémités desquels se trouvent des dispositifs de glissement (13, 14) réglables verticalement et mobiles sur les deux profils, le dispositif de calibrage (18) étant installé de façon fixe au-dessus des bras de support (10, 11) sur les deux profils (7, 8).

2. Système d'équipement rapide selon la revendication 1 **caractérisé en ce qu'**une station centralisée d'élimination d'eau (22) est fixée à un réservoir sous vide qui est reliée de façon flexible par un tuyau flexible (24) à la séparation eau-air du dispositif d'élimination d'eau (25) et que l'ensemble des réservoirs sous vide (9) est relié de façon fixe à la station d'élimination d'eau (22).
